Europäisches Patentamt

European Patent Office

Office européen des brevets

(11) Publication number: **0 233 708**
**A2**

(12) # EUROPEAN PATENT APPLICATION

(21) Application number: 87300530.0

(22) Date of filing: 22.01.87

(51) Int. Cl.⁴: **G 02 B 1/10**

(30) Priority: 18.02.86 US 830376

(43) Date of publication of application:
26.08.87 Bulletin 87/35

(84) Designated Contracting States:
AT BE CH DE ES FR GB GR IT LI LU NL SE

(71) Applicant: PRECISION-COSMET CO., INC.
11140 Bren Road West
Minnetonka Minnesota 55343 (US)

(72) Inventor: Powell, James Cage
4517 Wilson Street
Minnetonka MN 55345 (US)

Jarvis, Marie Cecilia
4912 Royal Oak Drive
Minnetonka MN 55343 (US)

(74) Representative: Geldard, David Guthrie et al
URQUHART-DYKES AND LORD Tower House Merrion
Way
Leeds West Yorkshire LS2 8PA (GB)

(54) **Coated substrates.**

(57) A process for adhering a viscous coating on a polymeric
material and the coated article are disclosed. The process is
particularly useful for binding hyaluronic acid on intraocular or
contact lenses to provide a lens having a viscous mechanical
barrier to avoid damaging the eye. Initially the lens, for example,
polymethylmethacrylate, is treated to polarize the surface.
Thereafter the surface is coated with a solution of hyaluronic
acid and the free and bound water is removed. Polarization is
preferably performed by water plasma treatment of the lens
surface. The resultant film is tenaciously bound to the lens
surface.

**Description**

## COATED SUBSTRATES

### Field of the Invention

The subject invention relates to a process for coating a substrate and the coated article produced thereby. The main application of the invention is the coating of hyaluronic acid on the surface of intraocular lenses or contact lenses. With respect to intraocular lenses, the coating serves to facilitate insertion in the eye during surgery.

### Background of the Invention

The use of hyaluronic acid, specifically as a dilute aqueous sodium hyaluronate solution, to aid intraocular surgery is well known. Generally speaking, a small quantity of the solution is coated on the lens prior to insertion in order to prevent destruction of the endothelial cells on the cornea or injected in the cornea to maintain the eye shape during surgery. Cell loss is particularly detrimental because in humans these cells are not regenerable. The advantages of so using hyaluronic acid has been widely reported in the literature: D. Peter Choyce, "Healon® in Anterior Chamber Lens Implantation", AM Intra-Ocular Implant Soc. J., Vol. 7, April 1981, pp. 138-9; Richard A. Perritt, "The Use of Healon® in Anterior Chamber Lens Implantation", AM Intra-Ocular Implant Soc. J., Vol. 8, Winter 1982, pp. 55-58; Phillip C. Hoopes, "Sodium Hyaluronate (Healon®) in Anterior Segment Surgery: A Review and a New Use in Extracapsular Surgery", AM Antra-Ocular Implant Soc. J., Vol. 8, Spring 1982, pp. 148-154; Herbert E. Kaufman et al., "Protection of the Corneal Endothelium During IOL Surgery: A Symposium", The CLAO Journal, Vol. 9, No. 2 (April 1983), pp. 97-101; Darrell E. Genstler et al., "Amvisc® in Extracapsular Cataract Extraction", AM Intra-Ocular Implant Soc. J., Vol. 9, Summer 1983, pp. 317-320.

The difficulty of such procedure was that obtaining a uniform coating of the hyaluronic acid on the lens could not be readily achieved; and, furthermore, it was not uncommon for the loosely bound surface coating to be wiped off the lens during insertion.

In light of the foregoing, it will be understood that it would be most desirable to develop a technique to tenaciously bind the hyaluronic acid to the lens surface. Such binding, however, has not been readily achieved and has therefore lessened the advantage of surgical techniques using hyaluronic acid either by coating or injection. The binding of the hyaluronic acid solution to the polymethymethacrylate presents a major problem, since the technique employed must be such that the treated lens remains non-toxic to the eye. Known techniques for binding the hyaluronic acid to the surface, such as covalent bonding, have not been effective because of the potential toxicity of the resultant lenses, e.g., U.S. Patent 4,487,865, and the time necessary to evaluate a chemical bonding mechanism for governmental approval.

### Brief Description of the Invention

The subject invention relates to a comparatively straightforward method of bonding hyaluronic acid to the surface of intraocular lenses as well as other substrates so as to provide a coated, non-toxic structure. Basically, the process involves the initial reaction of the substrate surface, preferably by means of an air, water or hydrogen peroxide plasma treatment. (Such treatment of plastic contact lenses is described in U.S. Patent 3,925,178, where it is described for the purpose of improving the wettability of fluids present in the eye of conventional plastic contact lenses.) In accordance with the invention, after the surface is activated (that is, polar groups (OH) are formed thereon), the substrate surface is contacted with an aqueous solution of hyaluronic acid as a salt thereof, preferably the sodium salt. In the final step of the process, the treated substrate is dried so as to remove both free and bound water; preferably, this procedure is performed under vacuum. By following the foregoing procedure, it has been discovered that the surface coating of hyaluronic acid is tenaciously bound to the surface of the substrate so that, in the case of a lens, the acid is not readily displaced during insertion of the lens into the eye or during its presence therein.

### Detailed Description of the Invention

While intraocular lenses made of polymethylmethacrylate are preferably used in the practice of the invention, numerous other polymeric materials may be so treated. These include silicone-acrylates; styrenes; nylons; polycarbonates; polyurethanes; or any other material which may be used as a contact lens or implanted in a body cavity.

In addition to the application of the instant invention to contact lenses and intraocular lenses inserted by surgery, the teaching of the instant invention would also be applicable wherever it is desirable to use hyaluronic acid coated substrates, e.g., for catheters, heart valves, surgical instruments and artery transplants. Where used on contact lenses, the coating would ease the "break in" period for the user.

The purpose of the reaction of the polymer surface is to create polar groups (OH) on the surface. Any known technique may be used for this purpose. Most desirable are plasma techniques which result in the surface modification of the polymer by direct and radiative energy transfer. Fundamentally, the plasma (that is, a gaseous state consisting of atoms, molecules, ions, metastables and excited states of these and electrons) is generated by AC, DC or RF electrode discharges, inductively coupled radio frequency, and microwaves in an inert gas. Plasma, by means of selective energy transfer to the surface of the polymer, effects the surface modification. Most preferably, radio frequency sources are used the plasma is generated by a radio frequency having a power of from 25 to 500 watts, at a pressure of from 1.333 to 66650 Pa (0.01 to 500 torr.) for a period of from 0.01 to 300 sec.

A wide variety of ions, radicals, etc., may be used to form the plasma. Most preferably, for the application of the instant invention, air, water or hydrogen peroxide is used, such as described by the aforementioned U.S. patent. Reference to the general techniques of surface treatment by means of plasma may be found in the following publications: H. Yasuda, "Plasma for Modification of Polymers" in Mitchel Shen, Ed., Plasma Chemistry of Polymers, New York: Marcel Dekker, Inc., 1976, pp. 15-52; D. T. Clark et al., "The Application of Plasmas to the Synthesis and Surface Modification of Polymers" in D. T. Clark et al., Ed., Polymer Surfaces, Chichester, England: John Wiley & Sons, 1978, pp. 185-211.

While plasma treatment is preferred, other treating techniques may be used to polarize the surface of the polymer. For example, acid oxidation of the surface will also create polar groups. However, such procedures may possibly cause toxicity problems.

To coat the polarized surface of the substrate with hyaluronic acid, the substrate is immersed in an aqueous solution of a water-soluble salt of the acid. Preferably the concentration of the acid is from 0.01 to 1.0%. While the sodium salt is most conventionally used, other soluble salts such as the potassium can be used. The salt form insures that the water solubility is high. Many salt-solvent combinations may be used, as will be apparent to those skilled in the art, so long as a good coating is formed.

The appropriate thickness of the coating is not critical. It is only necessary that the coating be adequately thick to uniformly coat the substrate. Variations of the thickness may be achieved by varying the concentration of the coating solution or performing multiple coating operations.

After the polymer surface is treated, it is necessary to drive off both the free and the bound water from the substrate. This may be readily done by heating the substrate in a vacuum at a pressure of from 666.5 to 39990 Pa (5 to 300 mm Hg) at a temperature of from 20° to 100°C for a period of from 1 to 48 hrs. Of course, the optimum period for the drying operation will depend on the specific temperatures and pressures employed, as well as the substrate which is being dried. The optimum conditions can be readily determined by those skilled in the art.

In order to more fully illustrate the subject invention, attention is directed to the following examples:

Example 1

A polymethylmethacrylate (pmma) sheet was treated in a water-hydrogen peroxide (85:15) plasma for two minutes at 250 watts and at 39.99 Pa (0.3 torr.) in a dry plasma etching apparatus (PlanarEtch II, a trademark of Technics, Inc. of Springfield, VA). This formed OH groups on the surface of the pmma. A dilute 0.05% (wt/vol) solution of sodium hyaluronate in dilute saline was cast onto the surface of the pmma and allowed to dry under infra-red light for one hour at 65°C. The pmma sheet was further dried in a vacuum oven at 78°C for 16 hours at 799.8 Pa (6 torr.) The resulting coating was a frosty white. Repeated rinsings and physical rubbing of the film did not reduce the wettability of the area of the film. Upon rinsing in a saline solution, it was observed that the coated area wet very easily and that the solution on the non-coated area beaded up. The coated area remained slippery to touch after repeated rinsing and rubbing with the thumb. Methylene blue staining indicated the presence of hyaluronic acid on the coated area after repeated rinsing and rubbing.

Example 2

Example 1 was repeated, except a saline-free 0.07% sodium hyaluronate solution was used for the coating and the vacuum drying was done at a temperature of 38°C. The coatings on the sheet were extremely clear and it was not apparent where the coating began and where it ended. Upon rinsing with saline, it was observed that the coated area wet well, while the non-coated area did not. The coated area was slippery when rubbed with the thumb and remained slippery and wet well after repeated rubbing. Methylene blue staining indicated the presence of hyaluronic acid on the coated area after repeated rinsing and rubbing.

Example 3

Example 2 was repeated, except that the vacuum step was performed at ambient temperature. Again, the coatings were clear. Upon rinsing with saline, it was noted that the coated area wet well, while the uncoated did not. The coated area was not very slippery when rubbed with the thumb, but did retain wettability upon repeated rinsing and rubbing. Methylene blue staining indicated the presence of hyaluronic acid after repeated risning and rubbing.

Example 4

Example 3 was repeated, except that, after the plasma treatment, the sheet was rinsed with distilled water prior to coating with the saline-free sodium hyaluronate. The coated area was clear with no white, cloudy spots. Upon rinsing with saline, it was found that only coated areas of the square wet and stayed slippery even after repeated rinsing and rubbing with the thumb. Methylene blue staining indicated the presence of hyaluronic acid after repeated rinsing and rubbing.

Example 5

Example 2 was repeated, except that the coated acrylic sheet was stored in saline for one week after vacuum treatment and rubbing. Tests showed that the coated area wet well, while the uncoated area did not. The coated area was not very slippery when rubbed, but it did retain its wettability after repeated rinsing and rubbing. Methylene blue staining indicated the presence of hyaluronic acid after repeated rinsing and rubbing.

Example 6

To determine the actual effectiveness of the coating process of the invention, tests were performed using the endothelial cells of cow corneas.

The corneas were peeled from the eye globe and, using an 8 mm trephine, cut into a plurality of buttons. The buttons were placed in a Petrie dish filled with an isotonic saline solution and stained with Alizarin Red by placing stain on the edge of the button and allowing it to spread over the entire surface for 20 to 30 seconds. Each stained button was rinsed in an isotonic saline bath to remove excess stain and placed in the center of an acrylic ring adhered to a glass slide. The acrylic ring served to position the button and prevent sliding. Each of the stained buttons was viewed under a microscope to be certain that the cell structure was normal.

To demonstrate the invention, acrylic rods, treated and untreated, were positioned vertically over the stained buttons. The end of the acrylic rod has a hemispherical polished surface designed to imitate the curvature of an intraocular lens. The rod was brought downwardly into contact with the button, applying a predetermined weight thereto. Thereafter the rod, while pressing down against the button, was moved horizontally so as to slide the end across the button surface a predetermined distance. After the removal of the rod, the cornea was viewed under a light microscope and damage determined. The treated rods were coated in accordance with the procedure described in Example 2 above.

An Ohaus single pan balance was used to apply the predetermined weight to the button. A cross-feed fixture fitted on the balance served to move the acrylic rod the fixed distance across the surface of the button.

The untreated acrylic rods were placed in contact with the endothelium of the cow corneas with a force of 5 g and moved a distance of 4 and 8 mm, respectively, across the cornea. In both instances the damage was substantial. With the treated rods, tests were performed at 8, 12, 12.5, 13, 13.5, 14, 14.5, and 15 g. With the exception of one test at 13 g, where only a trace of damage was noted, all tests 13 g or less resulted in no damage whatever to the cornea. In each case, the movement across the button was 8 mm. These data clearly show that the treatment in accordance with the invention results in far less damage to the cornea upon contact with the acrylic rod.

Comparative Example A

Example 1 was repeated, except that the vacuum drying step was omitted. The coated area of the sheet was clear except for one small spot a few millimeters is diameter, which was a hazy white. Upon rinsing with saline, the coated area was initially slippery to the touch. Upon repeated rinsing and rubbing with the thumb, the previously coated area was not slippery but the entire square wet very well. Methylene blue staining after repeated rinsing and rubbing indicated that there was no hyaluronic acid present.

Comparative Example B

In this example, the pmma sheet was coated with a 0.05% solution of sodium hyaluronate and dried without the water peroxide plasma pre-treatment. The hyaluronic acid film on the sheet was circular and peeling away from the sheet at the edges. Upon rinsing with saline, it was observed that no area of the sheet wet. Methylene blue staining after repeated rinsing and rubbing indicated that there was no hyaluronic acid present.

Comparative Example C

In this example, the acrylic film was coated with a 0.05% solution of hyaluronic acid, dried and subjected to a vacuum of 29.75 in. Hg at 20°C. The results were essentially the same as Comparative Example B. The film peeled away from the edges of the sheet. Gentle rubbing pulled the film completely off the acrylic sheet. Upon rinsing with saline, it was observed that no area of the sheet wet. Methylene blue staining after repeated rinsing and rubbing indicated that there was no hyaluronic acid present.

The foregoing comparative examples clearly show that, in order to achieve best results with the instant invention, it is desirable to plasma-treat, coat, and vacuum-treat after drying.

## Claims

1. A process for treating a substrate to obtain an adherent coating of hyaluronic acid thereon which comprises: polarizing said substrate; immersing said substrate in a solution of hyaluronic acid or a salt thereof; and drying said substrate so as to remove both free and bound water.

2. A process according to claim 1 wherein the substrate is polarized by means of a plasma treatment.

3. A process according to claim 2 wherein the plasma is formed from water and hydrogen peroxide.

4. A process according to claim 3 wherein the plasma is generated by a radio frequency having a power of from 25 to 500 watts, at a pressure of from 1.333 to 66650 Pa for a period of from 0.01 to 300 sec.

5. A process according to any one of the preceding claims wherein the substrate is a polymethylmethacrylate.

6. A process according to any one of the preceding claims wherein the substrate, after polarization, is treated with a solution containing from 0.01 to 1.0 wt. % of hyaluronic acid or a salt thereof in water.

7. A process according to any one of the preceding claims wherein the substrate is an intraocular lens.

8. A process according to claim 7 wherein the intraocular lens is of a polymeric material.

9. A process according to claim 8 wherein the polymeric material is polymethylmethacrylate.

10. A process according to any one of the preceding claims wherein the drying step is performed under vacuum.

11. A coated substrate which comprises a substrate having a polarized surface layer having hydroxyl groups thereon, said hydroxyl groups being bonded to the hydrogen ions of a hyaluronic acid coating.

12. A coated intraocular lens which comprises a polymethylmethacrylate substrate having bonded to the surface thereof hyaluronic acid.